# EUROPÄISCHE PATENTANMELDUNG

(11) **EP 2 722 483 A2**
(43) Veröffentlichungstag der Anmeldung: **23.04.2014**
(21) Anmeldenummer: 13183350.1
(22) Anmeldetag: 06.09.2013
(51) Int. Cl.: F01D 5/06, F01D 5/34, F01D 5/02, F01D 25/22, F04D 29/057, F04D 29/058, F04D 29/26, F16C 32/04, F16C 32/06

(54) **Turbomaschine zur Verdichtung eines gas- oder dampfförmigen Fluids**

(30) Priorität: 19.10.2012 DE 102012110029
(71) Anmelder: Atlas Copco Energas GmbH, 50999 Köln (DE)
(72) Erfinder: Bosen, Stefan, 51143 Köln (DE); Sopper, Alfred, 50169 Kerpen (DE); Wittich, Hauke, 50677 Köln (DE); Wiebe, Frank, 41542 Dormagen-Gohr (DE)
(74) Vertreter: Albrecht, Rainer Harald

(57) **Zusammenfassung**

Die Erfindung betrifft eine Turbomaschine zur Verdichtung eines gas- oder dampfförmigen Fluids. Diese umfasst ein Gehäuse (1), in der ein Rotor (2) drehbar gelagert ist. Erfindungsgemäß weist der Rotor (2) eine schlanke Achse (5) sowie ein Paket aus mehreren Scheiben (6) mit integrierten Rotorschaufeln auf. Dabei ist an der Achse (5) zumindest ein Bund (7) angeformt, über den das Paket aus Rotorscheiben (6) mit der Achse (5) verbunden ist. Die Achse (5) ist mit Lagern (3, 4) im Gehäuse (1) gelagert.

## Beschreibung

Die Erfindung betrifft eine Turbomaschine zur Verdichtung eines gas- oder dampfförmigen Fluids mit einem in einem Gehäuse drehbar gelagerten Rotor.

Bei industriellen Anwendungen z. B. in chemischen oder petrochemischen Anlagen, werden Turbomaschinen häufig unter genau kontrollierbaren Bedingungen in einem definierten Durchsatz- und Drehzahlbereich betrieben. Die auf diesen Arbeitspunkt optimierten Rotoren bestehen aus einer massiven Welle, an der Rotorschaufeln befestigt sind. Die Fertigung und Auswuchtung einer solchen Rotoranordnung ist aufwendig. Weiterhin ist zur Lagerung des Rotors üblicherweise ein fluidgeschmiertes, beispielsweise ölgeschmiertes, Lagerungssystem vorgesehen, wobei ein wirksames Dichtungssystem notwendig ist, um eine Verunreinigung des die Turbomaschine durchströmenden Fluids durch das Schmiermittel zu verhindern.

Aus dem Flugzeugbau sind Scheiben mit integrierten Turbinenschaufeln, sogenannte Blisken, bekannt. Bei einstückig mit einer Scheibe verbundenen Turbinenschaufeln lassen sich beträchtliche Materialmengen einsparen, welche nicht zur Montage und Justierung der einzelnen Schaufeln benötigt werden. Insbesondere können im Zentrum der Scheibe Bereiche ausgespart werden. Dies führt jedoch dazu, dass sich bei einer Hintereinanderschaltung mehrerer Blisken die einzelnen Fertigungs- und Montagetoleranzen addieren, so dass eine robustere Lagerung notwendig ist und sich Einschränkungen hinsichtlich der maximal zulässigen Drehzahl ergeben.

Aufgabe ist es, eine Turbomaschine zur Verdichtung eines gas- oder dampfförmigen Fluids anzugeben, welche mit einer kleiner dimensionierten Lageranordnung auskommt und mit hohen Drehzahlen betrieben werden kann. Gegenstand der Erfindung und Lösung dieser Aufgabe ist eine Turbomaschine nach Anspruch 1.

Zum grundsätzlichen Aufbau der Turbomaschine gehören ein Gehäuse, an dem ein Rotor drehbar gelagert ist. Die Lagerung erfolgt dabei an Axiallagern und Radiallagern. Erfindungsgemäß weist der Rotor eine schlanke Achse sowie ein Paket aus mehreren Scheiben mit integrierten Rotorschaufeln auf. Die Achse bildet einen Abschnitt einer zentralen Rotorwelle und hat radial keinen Kontakt mit den zwischenliegenden Scheiben des Rotors. Der Durchmesser der Achse ist möglichst klein gewählt, um die Gesamtmasse des Rotors zu reduzieren. Gleichzeitig ist der Durchmesser jedoch so bemessen, dass eine zuverlässige Kraftweiterleitung und die Maßhaltigkeit des Rotors in allen zu erwartenden Betriebszuständen gewährleistet sind. An die schlanke Achse ist zumindest ein Bund angeformt, welcher in radialer Richtung absteht. Das Paket aus Rotorscheiben ist über den Bund mit der Achse verbunden. Derartige Scheiben mit integrierten Rotorschaufeln werden auch als *Bladed Integrated Disk (Blisk)* bezeichnet und einstückig, in der Regel durch zerspanende Bearbeitungsprozesse, hergestellt. Die Scheiben weisen eine mit einer Außenumfangsfläche konzentrische mittlere Aussparung auf, durch welche im montierten Zustand ein Abschnitt der schlanken Achse mittig verläuft. Zwischen der Achse und einer inneren Berandung der Blisken ist ein Abstand vorgesehen. Nach der Erfindung ist der Rotor mit Lagern im Gehäuse gelagert. Das Zusammenwirken einer zentralen, schlanken Achse, einer leichten Bauform des Rotors, die Verwendung präziser ausgewuchteter Blisken sowie reibungsarmer Lager bewirkt eine große Laufruhe des Rotors und ermöglicht einen Betrieb der Turbomaschine mit sehr hohen Drehzahlen bei industriellen Anwendungen.

Vorzugsweise sind zumindest Teile der Lageranordnung als Magnetlager ausgebildet. Eine Magnetlagerung ist möglich, da durch die Verwendung von Blisken die Masse des Rotors so weit reduziert werden kann, dass ein wirtschaftlicher Einsatz von Magnetlagern möglich ist. Eine ausschließliche Ausführung mit Magnetlagern hat zudem den Vorteil, dass auf ein Schmiermittel gänzlich verzichtet werden kann.

In anderen bevorzugten Ausführungen sind die Lager zumindest teilweise als Wälzlager, hydrodynamische Gleitlager oder hydrostatische Gleitlager ausgeführt.

Bevorzugt sind an der Achse zwei Bundflächen angeformt, zwischen denen ein schlanker Bereich angeordnet ist. An den beiden Bundflächen liegt jeweils eine der endständigen Scheiben des Pakets an und/oder ist mit dieser verbunden. Dabei können beide endständigen Scheiben an den beiden Bünden befestigt und das Paket aus Scheiben dazwischen verspannt sein.

Bei einer Anordnung mit zwei Bundflächen ist der Rotor vorzugsweise an Lagern, welche außerhalb der die Bundflächen aufweisenden Vorsprünge angeordnet sind, axial und radial gelagert. Die Lager können dabei als separate oder als kombinierte Axial-/Radiallager ausgebildet sein.

Vorzugsweise ist die Turbomaschine zumindest teilweise in axialer Bauart ausgeführt. In diesem Fall strömt das gas- oder dampfförmige Fluid zumindest abschnittsweise in einer Richtung parallel zur Drehachse des Rotors. Zusätzlich können auch Elemente radial arbeitender Strömungsmaschinen vorgesehen sein.

In einer bevorzugten Ausführung weisen die Scheiben des Rotors in radialer Richtung stufenförmige Absätze auf. Dabei greifen die stufenförmige Absätze benachbarter Scheiben ineinander. Aufeinandergesteckte Scheiben sind durch diese Verbindung wirkungsvoll gegen seitliches Verrutschen gesichert. Dies führt zu einem zuverlässigen Zusammenhalt schon bei einem Paket, bei dem nur die endständigen Scheiben gegeneinander verspannt sind. Zusätzlich können auch jeweils unmittelbar aufeinanderfolgende Scheiben paarweise miteinander, beispielsweise durch Schrauben, verbunden sein.

Zweckmäßigerweise weisen die Scheiben des Rotors mittig Bereiche ohne Turbinenschaufeln mit unterschiedlichen Durchmessern auf.

Vorzugsweise begrenzen die Bereiche ohne Turbinenschaufeln der Scheiben des Rotors in radialer Richtung eine gemeinsame Mantelfläche, welche rotationssymmetrisch um die Drehachse liegt und konisch zuläuft. Durch die gleichmäßige Verjüngung des Querschnitts treten in der Turbomaschine keine unerwünschten Verwirbelungen an diskontinuierlichen Durchmesserübergängen auf.

Ein Ausführungsbeispiel der Erfindung soll im Folgenden anhand der Zeichnungen erläutert werden. Es zeigen schematisch:

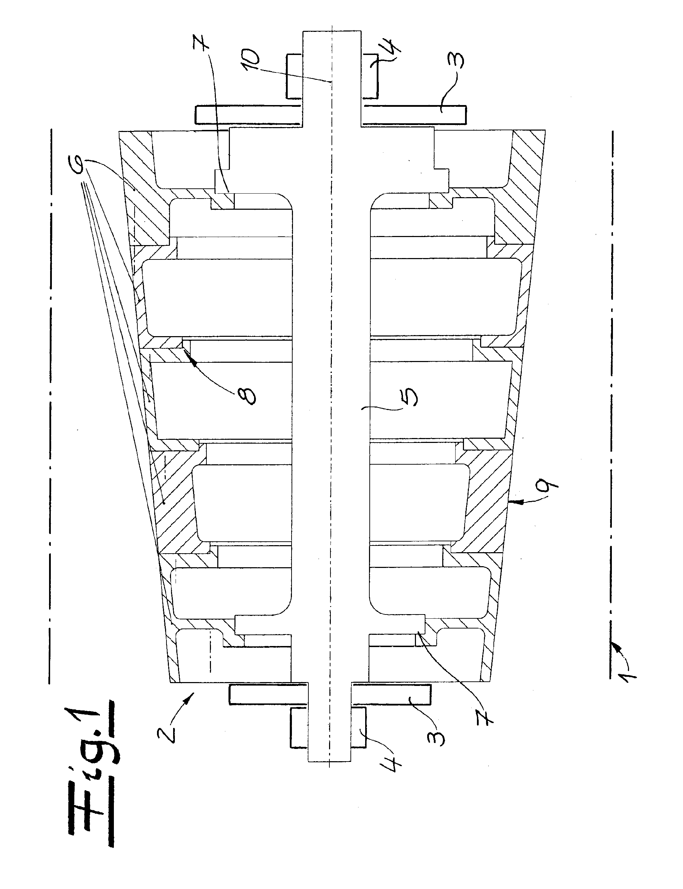

- Fig. 1: einen Längsschnitt durch den Rotor einer erfindungsgemäßen Turbomaschine mit schematisch angedeuteten Lageranordnungen und
- Fig. 2: eine detaillierte Schnittzeichnung durch eine Magnetlageranordnung für eine erfindungsgemäße Turbomaschine.

Zum grundsätzlichen Aufbau der Turbomaschine zur Verdichtung eines gas- oder dampfförmigen Fluids gehört ein Gehäuse 1, welches hier nur gestrichelt angedeutet ist. Die detaillierte Ausführung ist für die Erfindung unerheblich. In dem Gehäuse 1 ist ein Rotor 2 an Lagern 3, 4 drehbar gelagert. Erfindungsgemäß weist der Rotor 2 eine schlanke Achse 5 sowie ein Paket aus mehreren Scheiben 6 mit integrierten Rotorschaufeln auf. Dabei sind die in dem Bereich zwischen dem dargestellten Teil des Rotors 2 und der beabstandet angeordneten Wandung des Gehäuses 1 angeordneten Rotorschaufeln der Scheiben 6 nicht dargestellt. An die Achse 5 sind zwei Bundflächen 7 angeformt, über die das Paket aus Rotorscheiben 6 mit der Achse 5 verbunden ist. Im dargestellten Ausführungsbeispiel liegen jeweils nur die beiden endständigen Scheiben 6 an den Bundflächen 7 an und sind mit diesen verbunden. Die Achse 5 ist gemäß einer bevorzugten Ausgestaltung mit axialen Magnetlagern 3 und radialen Magnetlagern 4 im Gehäuse gelagert.

Die Scheiben 6 des Rotors 2 weisen in radialer Richtung stufenförmige Absätze 8 auf. Die Absätze 8 benachbarter Scheiben 6 greifen ineinander bzw. an eine zugeordnete Form der angrenzenden Scheibe. Die Scheiben 6 des Rotors 2 weisen unterschiedliche Durchmesser auf. Dabei begrenzen sie in radialer Richtung eine gemeinsame Mantelfläche 9, welche rotationssymmetrisch um die Drehachse 10 liegt und konisch zuläuft.

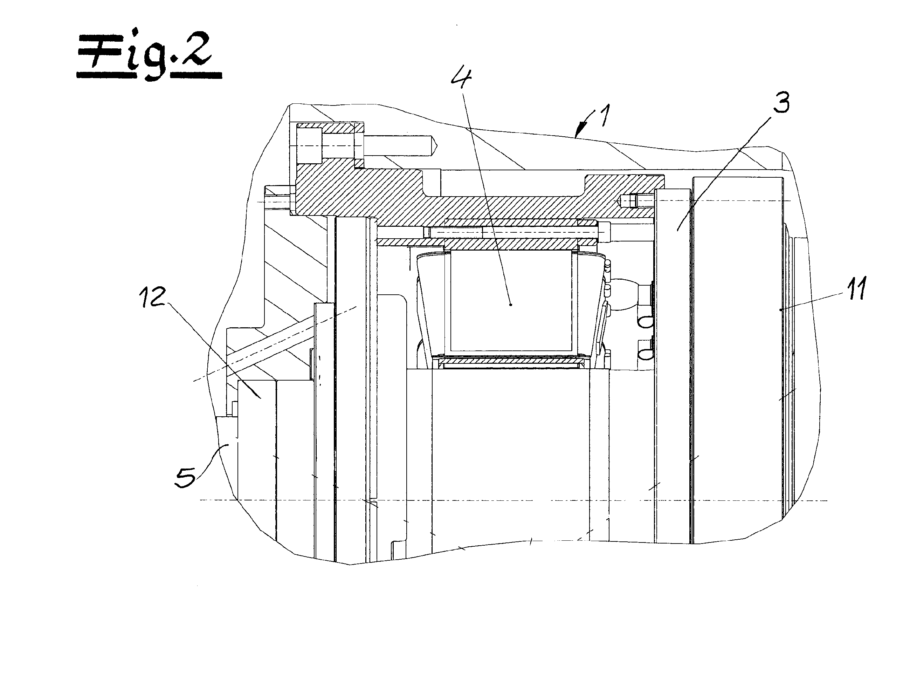

Die Figur 2 zeigt eine mögliche Ausgestaltung der magnetischen Lagerung der Achse 5. Die Lageranordnung umfasst ein radiales Magnetlager 4, welches direkt auf die Achse 5 wirkt. Ein axiales Magnetlager 3 steht mit einer an der Achse 5 befestigten Lagerscheibe 11 in Wechselwirkung. Für einen Ausfall der aktiven magnetischen Lagerung 3, 4 ist ferner ein Fanglager 12 vorgesehen.

## Patentansprüche

1. Turbomaschine zur Verdichtung eines gas- oder dampfförmigen Fluids mit einem in einem Gehäuse (1) drehbar gelagerten Rotor (2), **dadurch gekennzeichnet, dass** der Rotor (2) eine schlanke Achse (5) sowie ein Paket aus mehreren Scheiben (6) mit integrierten Rotorschaufeln aufweist, wobei an die Achse (5) zumindest ein Bund (7) angeformt ist und das Paket aus Rotorscheiben (6) über den Bund (7) mit der Achse (5) verbunden ist, und dass die Achse (5) mit Lagern (3, 4) im Gehäuse (1) gelagert ist.

2. Turbomaschine nach Anspruch 1, **dadurch gekennzeichnet, dass** an der Achse (5) zwei Bundflächen (7) angeformt sind, zwischen denen ein schlanker Bereich angeordnet ist, und dass an den Bundflächen (7) jeweils eine der endständigen Scheiben (6) des Pakets anliegen und/oder damit verbunden sind.

3. Turbomaschine nach Anspruch 2, **dadurch gekennzeichnet, dass** der Rotor (2) an Lagern (3, 4), welche außerhalb der die Bundflächen (7) aufweisenden Vorsprünge angeordnet sind, axial und radial gelagert ist.

4. Turbomaschine nach einem der Ansprüche 1 bis 3, **dadurch gekennzeichnet, dass** die Rotorschaufeln als Schaufeln für eine axiale Verdichtung des Fluids ausgebildet sind.

5. Turbomaschine nach einem der Ansprüche 1 bis 4, **dadurch gekennzeichnet, dass** die Scheiben (6) des Rotors (2) in radialer Richtung stufenförmige Absätze (8) aufweisen, wobei die stufenförmigen Absätze (8) benachbarter Scheiben (6) ineinandergreifen.

6. Turbomaschine nach einem der Ansprüche 1 bis 5, **dadurch gekennzeichnet, dass** die Scheiben (6) des Rotors (2) zentrale Bereiche ohne Turbinenschaufeln mit unterschiedlichen Durchmessern aufweisen.

7. Turbomaschine nach Anspruch 6, **dadurch gekennzeichnet, dass** die Bereiche ohne Turbinenschaufeln der Scheiben (6) des Rotors (2) in radialer Richtung eine gemeinsame Mantelfläche (9) begrenzen, welche rotationssymmetrisch um die Drehachse (10) liegt und konisch zuläuft.

8. Turbomaschine nach einem der Ansprüche 1 bis 7, **dadurch gekennzeichnet, dass** zumindest ein Lager (3, 4) als Magnetlager ausgebildet ist.

9. Turbomaschine nach einem der Ansprüche 1 bis 8, **dadurch gekennzeichnet, dass** zumindest ein Lager (3, 4) als hydrodynamisches oder hydrostatisches Gleitlager ausgebildet ist.

10. Turbomaschine nach einem der Ansprüche 1 bis 9, **dadurch gekennzeichnet, dass** zumindest ein Lager (3, 4) als Wälzlager ausgebildet ist.
